Europäisches Patentamt

European Patent Office

Office européen des brevets

(19)

(11) Numéro de publication: **0 268 543**
**B1**

(12) **FASCICULE DE BREVET EUROPEEN**

(45) Date de publication du fascicule du brevet:
07.11.90

(51) Int. Cl.⁵: **F16L 41/08**

(21) Numéro de dépôt: **87470018.0**

(22) Date de dépôt: **02.09.87**

(54) Dispositif de prise de branchement sur une canalisation.

(30) Priorité: **19.09.86 FR 8613162**

(43) Date de publication de la demande:
**25.05.88 Bulletin 88/21**

(45) Mention de la délivrance du brevet:
**07.11.90 Bulletin 90/45**

(84) Etats contractants désignés:
**AT DE ES FR GB IT SE**

(56) Documents cités:
**EP-A- 0 055 003**
**FR-A- 2 233 555**
**FR-A- 2 557 255**

(73) Titulaire: **PONT-A-MOUSSON S.A., 91, Avenue de la Libération, F-54017 Nancy(FR)**

(72) Inventeur: **Mignet, Vincent, 9 Les Longues Raies Blénod-lès-Pont-à-Mousson, F-54700 Pont à Mousson(FR)**
Inventeur: **Vigneron, Pierre, 7 rue St Pierre Maidières, F-54700 Pont à Mousson(FR)**

(74) Mandataire: **Puit, Thierry et al, Centre de Recherches de Pont-à-Mousson Service de Propriété Industrielle Boîte Postale 109, F-54704 Pont-à-Mousson Cédex(FR)**

**Description**

La présente invention concerne un dispositif de prise de branchement sur une canalisation, notamment une canalisation d'assainissement.

Parmi ces dispositifs on connaît ceux qui comprennent une tubulure comportant à sa base une assise dont l'ouverture est destinée à venir en regard d'une fenêtre pratiquée dans la paroi de ladite canalisation, une garniture d'étanchéité entourant ladite base de la tubulure et propre à assurer l'étanchéité entre celle-ci et la surface extérieure de la canalisation, et des moyens de fixation de ladite tubulure sur la canalisation.

Le fait que la garniture d'étanchéité soit disposée sur la surface extérieure de la canalisation permet d'éviter pratiquement les défauts d'étanchéité qui surviennent avec les dispositifs dans lesquels la garniture d'étanchéité s'étend à l'intérieur de la canalisation. En effet, les canalisations d'assainissement sont en fonte centrifugée et revêtues intérieurement d'un coulis de béton ou d'un mortier centrifugé, pour éviter une corrosion trop rapide. Lorsque dans une telle canalisation on découpe une fenêtre pour effectuer une prise de branchement, ce revêtement intérieur peut se craqueler et la garniture d'étanchéité ne peut plus alors assurer une parfaite étanchéité.

La disposition extérieure de la garniture d'étanchéité, dans un dispositif conforme à l'invention, apporte donc un progrès, puisque en cas de besoin on peut parfaitement préparer la partie de surface extérieure de la canalisation, qui reçoit cette garniture d'étanchéité.

Toutefois, l'étanchéité n'est pas encore parfaite, notamment au-delà d'une pression intérieure de 1,2 ou 1,3 bars, et en général les moyens de fixation de la tubulure de piquage sur la canalisation sont compliqués, coûteux et leur mise en place nécessite un temps assez long.

En outre, dans ces dispositifs il n'existe aucun moyen de resserrage qui serait susceptible de rattraper les tolérances de fabrication, résultant en particulier des dimensions de la fenêtre; or, ces tolérances peuvent entraîner des écarts importants dans la compression de la garniture d'étanchéité et l'étanchéité en résultant peut donc être imparfaite.

On connaît, d'après le document EP-A 55 003, un dispositif selon le préambule de la revendication 1.

Le but de la présente invention est donc de perfectionner les dispositifs du type défini plus haut de telle sorte qu'ils ne présentent plus les inconvénients dont il vient d'être question.

A cet effet, la présente invention a donc pour objet un dispositif de prise de branchement tel que revendiqué aux revendications 1 à 8.

Grâce à ces dispositions simplifiées la garniture d'étanchéité sera parfaitement et uniformément comprimée, d'une part entre la selle et la selle et la base de la tubulure, d'autre part entrela selle et la canalisation, ce qui assurera une parfaite étanchéité. En outre, la garniture d'étanchéité est visible au moment de sa mise en place, ce qui permet d'éviter tout risque de pose défectueuse et donc tout risque d'apparition ultérieure d'un défaut d'étanchéité.

Plus particulièrement, l'invention permet de réaliser l'étanchéité entre une canalisation principale et la prise de branchement qui, d'une part, assure l'étanchéité à une distance suffisante de la fenêtre, grâce à une garniture d'étanchéité réalisée à cet effet, et d'autre part,permet, grâce à un dispositif approprié, de resserrer le branchement afin d'obtenir un taux de compression satisfaisant de la garniture d'étanchéité.

Par ailleurs, et comme on le verra plus clairement par la suite, les moyens de fixation permettent un montage très rapide, avec une main d'oeuvre réduite et en ne nécessitant qu'un minimum d'outillage.

Un mode d'exécution d'un dispositif de prise de branchement conforme à la présente invention va maintenant être décrit à titre d'exemple nullement limitatif, ave référence aux figures du dessin annexé dans lequel :

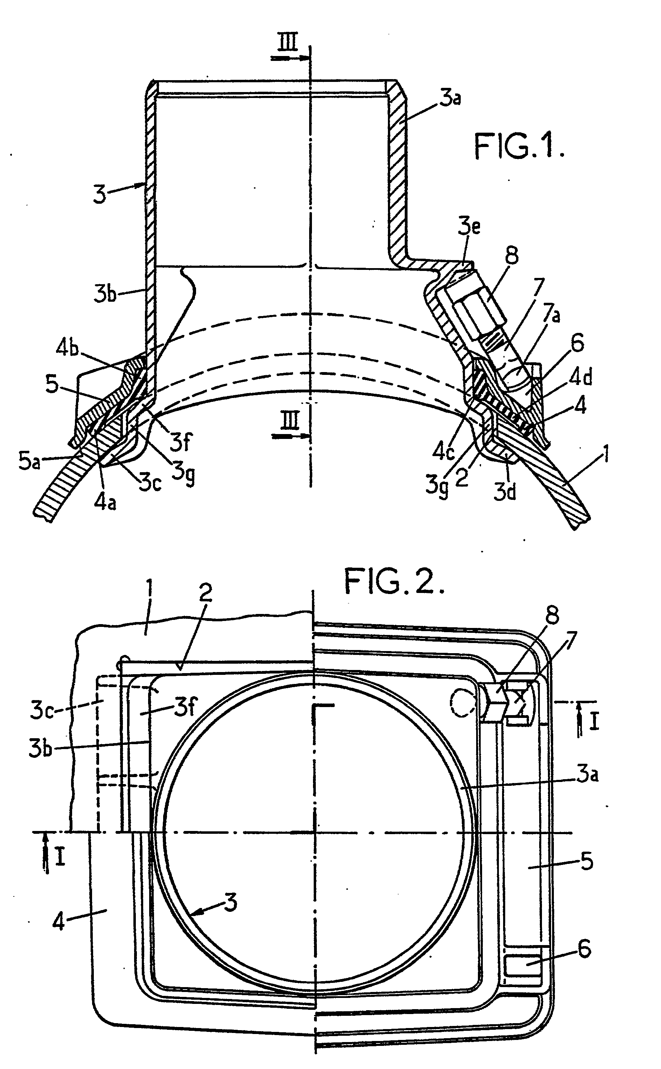

- la figure 1 est une vue en coupe de l'ensemble du dispositif selon la ligne I-I de la figure 2 ;
- la figure 2 est une vue en plan du dispositif de la figure 1, constituée de quarts de vues : de l'ensemble complet : sans le boulon ; sans la selle ; sans selle ni garniture d'étanchéité, ceci à partir du quart de vue situé en haut à droite et en tournant dans le sens horaire ;

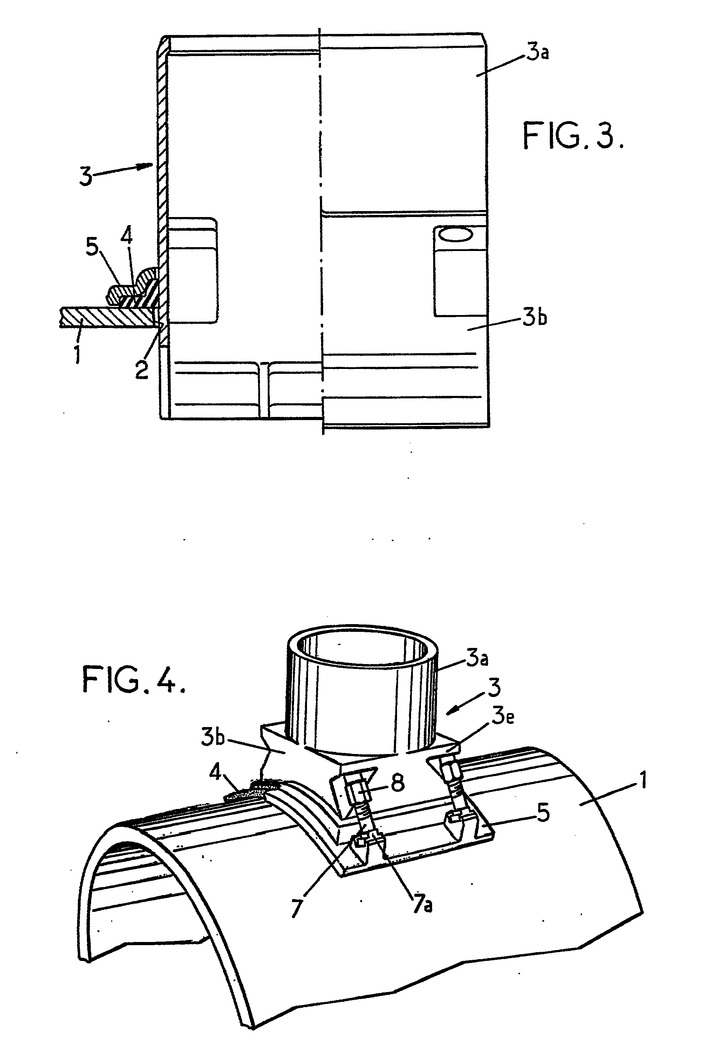

- la figure 3 est constituée d'une demi-vue extérieure de la tubulure seule (à droite) et d'une demi-vue en coupe selon la ligne III-III de la figure 1 (à gauche) ; et
- la figure 4 est une vue en perspective, avec arrachement partiel montrant la garniture d'étanchéité, d'une canalisation équipée d'un dispositif de prise de branchement conforme à l'invention, après mise en place desdits moyens de fixation.

Sur les différentes figures, la canalisation, par exemple une canalisation d'assainissement, a été référencée en 1. On a représenté en 2 une fenêtre, carrée ou rectangulaire, découpée dans la paroi de la canalisation à l'aide d'un outil approprié, par exemple une tronçonneuse à disque.

La tubulure destinée à être branchée sur cette canalisation a été référencée globalement en 3. Elle comporte un tronçon cylindrique 3 $\underline{a}$ dont le diamètre extérieur correspond aux cotes de tuyau destiné à y être connecté. Ce tronçon est suivi d'une base à section transversale carrée ou rectangulaire 3 $\underline{b}$, dont la forme générale et les dimensions sont adaptées à celles du tronçon cylindrique 3 $\underline{a}$. La base 3 $\underline{b}$ est suivie d'un tronçon rectangulaire 3 $\underline{q}$ dont la forme générale et les dimensions sont adaptées à celles de la fenêtre 2 (sur les dessins, cette forme est rectangulaire). Ce tronçon 3 $\underline{q}$ se termine selon duex de ses côtés opposés par une assise constituée de deux languettes d'accrochage 3 $\underline{c}$ et 3 $\underline{d}$, dont l'une (3 $\underline{c}$) est légèrement plus longue que l'autre et qui sont destinées à prendre intérieurement appui sur les duex bords opposés correspondants de la fenêtre 2.

En chacun de ses coins, la base 3 <u>b</u> comporte à sa partie supérieure un appui "coup de poing", référencé 3 <u>e</u>, dont le rôle sera vu plus loin.

La garniture d'étanchéité extérieure, référencée 4, destinée à assurer l'étanchéité entre la surface extérieure de la canalisation 1 et la tubulure 3, comporte les parties suivantes, moulées d'une pièce :
- une base 4 <u>a</u> de section rectangulaire et de forme plate, présentant, sur sa face destinée à être au contact de la canalisation, de fines stries concentriques et parallèles. Cette base 4 <u>a</u> de la garniture d'étanchéité 4 assurera donc l'étanchéité au niveau de la surface externe de la canalisation 1.
- un col tubulaire 4 <u>b</u> en forme de tronc de pyramide régulier aux angles arrondis et présentant à sa partie inférieure, au niveau de la transition avec la base 4 <u>a</u>, un bourrelet 4 <u>c</u> destiné à venir en appui sur un épaulement 3 <u>f</u> de la tubulure 3 reliant la base 3 <u>b</u> au tronçon 3 <u>g</u>. La surface interne de ce col est également pourvue de stries fines, concentriques et parallèles, pour assurer une bonne étanchéité au niveau de la partie correspondante de la surface extérieure de la tubulure 3.
- une membrane 4 <u>d</u> reliant la base 4 <u>a</u> au col 4 <u>b</u>, d'une épaisseur moindre que celle de la base 4 <u>a</u> et venue de moulage avec les autres parties de la garniture d'étanchéité 4, qui est ainsi d'une pièce.

La garniture d'étanchéité qui vient d'être décrite est comprimée contre les surfaces susindiquées, entre lesquelles elle assurera ainsi une excellente étanchéité, par une selle rigide, référencée globalement en 5. La face interne de cette selle a une forme correspondant à celle de la face externe de la garniture d'étanchéité 4, de sorte que la garniture d'étanchéité puisse en quelque sorte s'encastrer dans la selle 5 et être parfaitement maintenue en place lorsque la selle est fixée dans sa position. C'est ainsi que la selle 5 présente intérieurement un premier logement destiné à recevoir le col 4 <u>b</u> de la garniture d'étanchéité 4 et dont la face interne est donc également en forme de tronc de pyramide régulier aux angles arrondis, et un second logement, plus évasé, pour recevoir la membrane 4 <u>d</u> et la base 4 <u>a</u> de la garniture d'étanchéité. L'intérieur de ce dernier logement est rectangulaire et à angles arrondis ; sa partie terminal 5 <u>a</u> épouse la courbure extérieure de la canalisation 1. Pour ne pas alourdir le dessin, ces deux logements intérieurs de la selle 5 n'ont pas été référencés.

Extérieurement et aux angles, la selle 5 comporte en outre quatre logements 6 dont la direction générale est inclinée d'environ 30° vers l'intérieur, par rapport à l'axe de la tubulure 3. Ces logements 6 s'ouvrent ainsi respectivement en direction des appuis 3 <u>e</u> de la tubulure 3. On peut ainsi disposer entre chaque logement 6 et l'appui 3 <u>e</u> correspondant un organe de longueur réglable, propre à travailler en compression et comprimant ainsi la selle 5 contre la garniture d'étanchéité 4, la tubulure servant de point d'appui fixe, puisqu'elle est maintenue en place par ses languettes d'accrochage 3 <u>c</u> et 3 <u>d</u> en appui intérieurement sur les deux bords opposés de la fenêtre 2.

Avantageusement, les organes en question seront constitués par des boulons 7 à tête de gendarme, propres à travailler en compression au dévissage, jouant ainsi le rôle d'inverseurs d'efforts. La tête 7 <u>a</u> des boulons, étant calée dans le creux du logement 6 correspondant, empêche toute rotation du boulon 7 lorsque l'on dévisse l'écrou 8 pour effectuer le serrage de la selle 5 sur la garniture d'étanchéité 4, cet écrou étant à extrémité conique pour pouvoir au contraire tourner sous son appui 3 <u>e</u>. Le serrage des quatre écrous 8 est assuré jusqu'à ce que la partie terminale 5 <u>a</u> de la selle 5 vienne en appui sur la canalisation 1. Cette mise en butée de la selle sur la canalisation permet d'être assuré que la garniture d'étanchéité 4 est correctement comprimée sur tout son pourtour, au niveau du col 4 <u>b</u> et au niveau de la base 4 <u>a</u>, respectivement sur la base 3 <u>b</u> de la tubulure 3 et sur la canalisation 1, sans toutefois être excessivement écrasée, ce qui pourrait la détériorer et nuire à l'étanchéité.

On voit que le réglage du dispositif est très simple.

Il en est de même pour sa mise en place : on introduit tout d'abord la languette la plus large 3 <u>c</u> de la tubulure et la partie du tronçon 3 <u>g</u> qui la relie à l'épaulement 3 <u>f</u> dans la fenêtre 2, puis l'autre languette, puis on engage sur la tubulure ainsi mise en place tout d'bord la garniture d'étanchéité 4 puis la selle 5, ensuite de quoi on met les boulons 7 en place, et on finit par effectuer le serrage de la selle, comme il vient d'être indiqué.

Ainsi, le dispositif de branchement selon l'invention permet d'assurer une bonne étanchéité tout en n'utilisant que des pièces brutes de fonderie, en évitant en particulier des taraudages dans la canalisation principale.

## Revendications

1. Dispositif de prise de branchement sur une canalisation (1), du type comprenant une tubulure (3) comportant à sa base (3b) une assise dont l'ouverture est destinée à venir en regard d'une fenêtre (2) pratiquée dans la paroi de ladite canalisation (1), une garniture d'étanchéité (4) entourant ladite base (3b) de la tubulure (3), et propre à assurer l'étanchéité entre celle-ci et la surface extérieure de la canalisation (1), et des moyens de fixation de ladite tubulure (3) sur la canalisation (1), deux languettes d'accrochage (3c, 3d) situées selon deux côtés opposés de la base (3b), constituant ensemble l'assise de la tubulure (3) et propres à prendre appui, à l'intérieur de ladite canalisation (1), contre deux bords opposés de ladite fenêtre (2), caractérisé en ce que lesdits moyens de fixation comprennent:
    – une selle rigide (5) propre à s'engager autour de ladite base (3b) de la tubulure (3) et à s'appliquer par-dessus ladite garniture d'étanchéité (4); et
    – des organes de longueur réglable, propres à travailler en compression, intercalés entre ladite selle (5) et des appuis (3e) correspondants prévus sur ladite base (3b) de la tubulure (3).

2. Dispositif selon la revendication 1, caractérisé en ce que la garniture d'étanchéité (4) comprend une base (4a) plate propre à être pressée sur la surface externe de la canalisation (1), et un col tubulaire (4b) relié à la base (4a) par une membrane (4d) et propre à être pressé sur la partie correspondante de la surface extérieure de la tubulure (3).

3. Dispositif selon la revendication 1 ou 2, caractérisé en ce que la garniture d'étanchéité (4) comporte un bourrelet (4c) propre à venir en appui sur un épaulement (3f) de la tubulure (3).

4. Dispositif selon l'une quelconque des revendications précédentes, caractérisé en ce que la selle (5) comporte intérieurement un logement d'une forme générale correspondant à celle de la garniture d'étanchéité (4), de sorte que celle-ci peut pratiquement s'y encastrer.

5. Dispositif selon l'une quelconque des revendications précédentes, caractérisé en ce que ladite selle (5) possède une partie terminale (5a) par laquelle elle peut prendre appui, après serrage, contre la surface externe de la canalisation (1), de sorte à limiter l'écrasement de la garniture d'étanchéité (4).

6. Dispositif selon l'une quelconque des revendications précédentes, caractérisé en ce que lesdits organes (7) de longueur réglable sont constitués par des boulons à tête de gendarme.

7. Dispositif selon la revendication 6, caractérisé en ce que chaque tête (7a) du boulon (7) est bloquée en rotation dans un logement d'angle (6) de la selle (5), l'écrou (8) monté sur son extrémité opposée pouvant au contraire tourner sous son appui correspondant (3a).

8. Dispositif selon la revendication 7, caractérisé en ce que la direction générale des logements d'angle (6) est inclinée d'environ 30° vers l'intérieur, par rapport à l'axe de la tubulure (3).

## Patentansprüche

1. Vorrichtung zum Rohranschluß an eine Kanalisation (1), vom Typ mit einem Rohrstutzen (3), der an seiner Basis (3b) einen Sitz aufweist, dessen Öffnung dazu bestimmt ist, gegenüber ein Fenster (2) zu liegen zu kommen, das in die Seitenwand der Kanalisation (1) eingebracht ist, wobei eine Dichtungsgarnitur (4) die genannte Basis (3b) des Rohrstutzens (3) umgibt und geeignet ist, die Dichtheit zwischen dieser und der Außenoberfläche der Kanalisation (1) sicherzustellen, und Festlegemittel des Rohrstutzens (3) auf der Kanalisation (1) aufweist, wobei zwei Ankerzungen (3c, 3d), die entlang der beiden gegenüberliegenden Seiten der Basis (3b) angeordnet sind, eine Sitzanordnung des Rohrstutzens (3) bilden und geeignet sind, im Inneren der genannten Kanalisation (1) gegen zwei gegenüberliegende Ränder des genannten Fensters (2) in Andruck zu kommen, dadurch gekennzeichnet, daß die Festlegemittel aufweisen:
 – eine starre Unterlage (5), die geeignet ist, in Eingriff um die genannte Basis (3b) des Rohrstutzens (3) zu kommen und sich über die Dichtungsgarnitur (4) zu legen; und
 – längeneinstellbare Organe, die geeignet sind, unter Druck zu arbeiten, die zwischen der Unterlage (5) und entsprechenden Andrücken (3e) eingekeilt sind, die auf der Basis (3b) des Rohrstutzens (3) vorgesehen sind.

2. Vorrichtung nach Anspruch 1, dadurch gekennzeichnet, daß die Dichtungsgarnitur (4) eine flache Basis (4a) aufweist, die geeignet ist, auf die Außenoberfläche der Kanalisation (1) gepreßt zu werden, und einen rohrförmigen Kragen (4b) aufweist, der mit der Basis (4a) durch eine Membran (4d) verbunden ist, und geeignet ist, auf den entsprechenden Bereich der Außenoberfläche des Rohrstutzens (3) gedrückt zu werden.

3. Vorrichtung nach Anspruch 1 oder 2, dadurch gekennzeichnet, daß die Dichtungsgarnitur (4) einen Wulst (4c) aufweist, der geeignet ist, in Andruck auf eine Schulter (3f) des Rohrstutzens (3) zu kommen.

4. Vorrichtung nach einem der vorhergehenden Ansprüche, dadurch gekennzeichnet, daß die Unterlage (5) im Inneren eine Aufnahme von einer Form aufweist, die allgemein der Dichtungsgarnitur (4) entspricht, derart, daß diese sich praktisch einfügen kann.

5. Vorrichtung nach einem der vorhergehenden Ansprüche, dadurch gekennzeichnet, daß die Unterlage (5) einen Endbereich (5a) aufweist, durch den sie nach Klemmen gegen die Außenoberfläche der Kanalisation (1) andrücken kann, derart, daß sie das Zusammendrücken der Dichtungsgarnitur (4) begrenzt.

6. Vorrichtung nach einem der vorhergehenden Ansprüche, dadurch gekennzeichnet, daß die längeneinstellbaren Organe (7) aus Bolzen mit Polizistenkopf gebildet sind.

7. Vorrichtung nach Anspruch 6, dadurch gekennzeichnet, daß jeder Kopf (7a) des Bolzens (7) drehfest in einer Winkelaufnahme (6) der Unterlage (5) aufgenommen ist, wobei die an seinem gegenüberliegenden Ende angebrachte Mutter (8) dagegen unter ihrem entsprechenden Andruck (3e) drehbar ist.

8. Vorrichtung nach Anspruch 7, dadurch gekennzeichnet, daß die allgemeine Richtung der Winkelaufnahmen (6) ungefähr um 30° nach innen bezüglich der Achse des Rohrstutzens (3) geneigt ist.

## Claims

1. Device for connecting a branch to a pipe (1), of the type comprising a socket (3) comprising in its base (3b) a seat whereof the opening is intended to be located opposite an aperture (2) provided in the wall of said pipe (1), a sealing gasket (4) surrounding said base (3b) of the socket (3) and able to ensure the seal between the latter and the outer surface of the pipe (1), and means for fixing said socket (3) to the pipe (1), two clamping tongues (3c, 3d) situated along two opposite sides of the base (3b), together constituting the seat for the socket (3) and able to bear, inside said pipe (1), against two opposite edges of said aperture (2), characterised in that said fixing means comprise:
 – a rigid saddle (5) able to engage around said base (3b) of the socket (3) and to overly said gasket (4); and
 – members of adjustable length, able to work by compression, interposed between said saddle (5)

7  EP 0 268 543 B1

and corresponding supports (3e) provided on said base (3b) of the socket (3).

2. Device according to Claim 1, characterised in that the sealing gasket (4) comprises a flat base (4a) able to be pressed against the outer surface of the pipe (1), and a tubular neck (4b) connected to the base (4a) by a diaphragm (4d) and able to be pressed against the corresponding part of the outer surface of the socket (3).

3. Device according to Claim 1 or 2, characterised in that the gasket (4) comprises a bead (4c) able to bear against a shoulder (3f) of the socket (3).

4. Device according to one of the preceding Claims, characterised in that the saddle (5) comprises internally a housing of general shape corresponding to that of the gasket (4), so that the latter may fit therein in practice.

5. Device according to one of the preceding Claims, characterised in that said saddle (5) has a terminal part (5a) by which it may bear, after tightening, against the outer surface of the pipe (1), so as to limit the compression of the gasket (4).

6. Device according to one of the preceding Claims, characterised in that said members (7) of adjustable length are constituted by double-nip head bolts.

7. Device according to Claim 6, characterised in that each head (7a) of the bolt (7) is prevented from rotating in a corner housing (6) of the saddle (5), the nut (8) mounted on its opposite end on the contrary being able to rotate under its corresponding support (3e).

8. Device according to Claim 7, characterised in that the general direction of the corner housings (6) is inclined by approximately 30° towards the inside, with respect to the axis of the socket (3).

FIG.1.

FIG.2.

FIG.3.

FIG.4.